# FASCICULE DE BREVET EUROPEEN

(11) **EP 3 896 777 B1**
(45) Date de publication et mention de la délivrance du brevet: **05.06.2024**
(21) Numéro de dépôt: 21168218.2
(22) Date de dépôt: 13.04.2021
(51) Int. Cl.: H01M 10/48, G08C 23/04, H02J 7/00, H02J 13/00, H04Q 9/00

(54) **SYSTÈME DE COMMUNICATION DANS UNE BATTERIE ÉLECTRIQUE**
KOMMUNIKATIONSSYSTEM IN EINER ELEKTRISCHEN BATTERIE
COMMUNICATION SYSTEM IN AN ELECTRIC BATTERY

(30) Priorité: 14.04.2020 FR 2003703
(43) Date de publication de la demande: 20.10.2021
(73) Titulaire: Commissariat à l'Energie Atomique et aux Energies Alternatives, 75015 Paris (FR)
(72) Inventeur: HEIRIES, Vincent, 38054 GRENOBLE CEDEX 09 (FR); DESPESSE, Ghislain, 38054 GRENOBLE CEDEX 09 (FR); THOMAS, Remy, 38054 GRENOBLE CEDEX 09 (FR)
(74) Mandataire: Cabinet Beaumont

(56) Documents cités:
- DE-A1-102017 204 138
- DE-A1-102017 223 665
- KR-A- 20180 080 938
- US-A1- 2019 229 376

## Description

### Domaine technique

La présente description concerne le domaine des batteries électriques de façon générale, et vise plus particulièrement des communications entre différents dispositifs électroniques de contrôle dans une batterie électrique, confer US 2019 229376 A1.

### Technique antérieure

Une batterie électrique est un groupement de plusieurs cellules élémentaires de stockage d'énergie électrique (piles, accumulateurs, etc.) reliées en série et/ou en parallèle entre deux bornes de fourniture d'une tension continue.

Une batterie comprend généralement un boîtier de protection dans lequel sont logées les cellules de la batterie, ce boîtier laissant accessibles deux cosses respectivement connectées aux deux bornes de la batterie.

Dans de nombreuses batteries, on prévoit en outre, à l'intérieur du boîtier, divers dispositifs électroniques de contrôle locaux tels que des capteurs, des dispositifs de protection, des dispositifs de contrôle de température, etc., couplés à des cellules élémentaires et/ou à des ensembles de cellules élémentaires de la batterie.

Ces dispositifs de contrôle locaux sont généralement adaptés à communiquer avec un dispositif de contrôle global, en vue de mettre en oeuvre diverses fonctions de contrôle et/ou de gestion de la batterie.

Pour cela, on peut prévoir une communication filaire entre le dispositif de contrôle global et les dispositifs de contrôle locaux. Un inconvénient est alors que le nombre de câbles nécessaires à l'instrumentation de la batterie peut être important, entraînant une augmentation non négligeable du prix de revient et/ou du poids de la batterie. De plus, les câbles peuvent capter des perturbations électromagnétiques susceptibles d'altérer les signaux de données entre le dispositif de contrôle global et les dispositifs de contrôle locaux.

Pour éviter les inconvénients d'une communication filaire, il a déjà été proposé d'utiliser des communications par ondes radiofréquence (sans contact), entre le dispositif de contrôle global et les dispositifs de contrôle locaux. Toutefois, l'environnement, souvent fortement métallique, rend de telles communications difficiles et aléatoires.

Il serait souhaitable de pouvoir disposer d'un moyen de communication entre des dispositifs électroniques de contrôle à l'intérieur d'une batterie, palliant tout ou partie des inconvénients des moyens de communication susmentionnés.

### Résumé de l'invention

Ainsi, un mode de réalisation prévoit un système de communication dans une batterie électrique comportant une pluralité de cellules élémentaires disposées dans un boîtier, ce système comprenant des premier et deuxième dispositifs électroniques de contrôle destinés à être placés à l'intérieur du boîtier, dans lequel les premier et deuxième dispositifs électroniques de contrôle sont adaptés à communiquer l'un avec l'autre selon un procédé de communication par lumière visible non guidée.

Selon un mode de réalisation :
- le premier dispositif de contrôle est un dispositif de contrôle local destiné à être connecté aux bornes d'un ensemble d'une ou plusieurs cellules élémentaires de la batterie ; et
- le deuxième dispositif de contrôle est un dispositif de contrôle global.

Selon un mode de réalisation, le système comporte une pluralité de premiers dispositifs électroniques de contrôle adaptés à communiquer, selon ledit procédé, avec le même deuxième dispositif électronique de contrôle.

Selon un mode de réalisation, différents premiers dispositifs électroniques de contrôle sont adaptés à communiquer avec le deuxième dispositif électronique de contrôle à des longueurs d'ondes distinctes.

Selon un mode de réalisation, chaque premier dispositif électronique de contrôle comprend au moins un photoémetteur, et le deuxième dispositif électronique de contrôle comprend au moins un photorécepteur.

Selon un mode de réalisation, chaque premier dispositif électronique de contrôle comprend en outre au moins un photorécepteur, et dans lequel le deuxième dispositif électronique de contrôle comprend en outre au moins un photoémetteur.

Selon un mode de réalisation, les premier et deuxième dispositifs électroniques de contrôle sont adaptés à communiquer l'un avec l'autre selon un protocole de communication défini par la norme LiFi.

Selon un mode de réalisation, les premier et deuxième dispositifs électroniques de contrôle sont adaptés à communiquer l'un avec l'autre selon un protocole de communication pour liaison radiofréquence ou pour liaison filaire, éventuellement modulé sur une porteuse.

Selon l'invention chaque premier dispositif électronique de contrôle est configuré pour se mettre en veille entre deux phases de communication avec le deuxième dispositif électronique de contrôle,

et dans lequel chaque premier dispositif électronique de contrôle présente un circuit adapté à déclencher une sortie de veille à réception d'un signal lumineux émis par le deuxième dispositif électronique de contrôle.

Selon un mode de réalisation, chaque premier dispositif électronique de contrôle présente un circuit adapté à déclencher une sortie de veille sur détection d'une variation de courant, de tension ou de température.

Un autre mode de réalisation prévoit une batterie électrique comportant une pluralité de cellules élémentaires disposées dans un boîtier, et, à l'intérieur du boîtier, un système de communication tel que défini ci-dessus.

Selon un mode de réalisation, les premier et deuxième dispositifs électroniques de contrôle ne sont pas directement en regard l'un de l'autre, la communication entre lesdits dispositifs faisant intervenir des réflexions sur une face intérieure du boîtier.

Selon un mode de réalisation, le boîtier présente une face intérieure réfléchissante aux longueurs d'ondes du système de communication.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective illustrant de façon schématique un exemple d'une batterie électrique selon un mode de réalisation ; et
la figure 2 est un schéma électrique simplifié d'un exemple d'un système de communication entre des dispositifs électroniques de contrôle de la batterie électrique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation et l'assemblage des cellules élémentaires des batteries décrites n'ont pas été détaillés, les modes de réalisation décrits étant compatibles avec les réalisations et assemblages usuels de cellules élémentaires de batteries électriques. En outre, les capteurs ou autres éléments de contrôle que sont susceptibles de comporter les dispositifs électroniques de contrôle des batteries décrites n'ont pas été détaillés, les modes de réalisation décrits étant compatibles avec les capteurs ou éléments de contrôle usuels de batteries électriques. De plus, les fonctions de contrôle et/ou de gestion mises en oeuvre au moyen des dispositifs électroniques de contrôle décrits n'ont pas été détaillées, les modes de réalisation décrits étant compatibles avec les fonctions de contrôle et de gestion usuellement mises en oeuvre dans les batteries électriques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

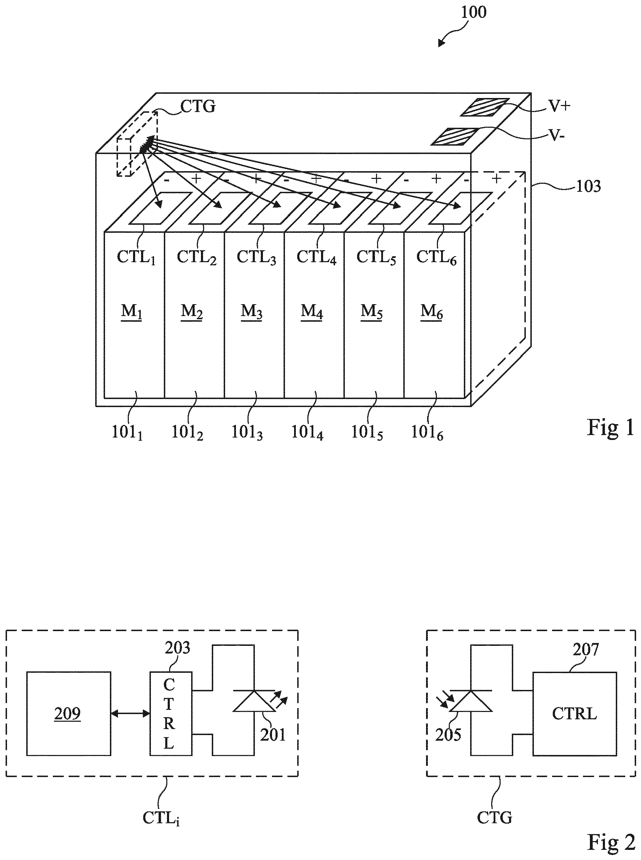

La figure 1 est une vue en perspective illustrant de façon très schématique un exemple d'une batterie électrique 100 selon un mode de réalisation.

La batterie 100 comprend N modules M₁, ... M_{N}, par exemple identiques ou similaires aux dispersions de fabrication près, avec N entier supérieur ou égal à 1 (N=6 dans l'exemple représenté). Chaque module Mᵢ, avec i entier allant de 1 à N, comprend une ou plusieurs cellules élémentaires (non détaillées sur la figure) connectées en série et/ou en parallèle entre une borne positive (+) et une borne négative (-) du module. Chaque module Mᵢ peut comporter un boîtier de protection spécifique 101ᵢ dans lequel sont disposées les cellules élémentaires du module. A titre de variante, les boîtiers 101ᵢ peuvent être omis, les cellules élémentaires des différents modules étant alors disposées dans un même espace, sans séparation inter-modules.

Les modules Mᵢ sont connectés électriquement en série et/ou en parallèle, par leurs bornes positive (+) et négative (-), entre une borne positive V+ et une borne négative V- de fourniture d'une tension de sortie de la batterie. Par souci de simplification, les connexions électriques des modules Mᵢ entre eux et aux bornes V+ et V- de la batterie n'ont pas été représentées.

La batterie 100 comprend en outre un boîtier de protection 103, par exemple en métal ou en plastique, dans lequel sont disposés les modules Mᵢ. Le boîtier 103 laisse accessible uniquement deux métallisations de connexion ou cosses connectées électriquement respectivement aux bornes V+ et V- de la batterie. A titre de variante, le boîtier peut laisser accessibles d'autres éléments de connexion, par exemple des métallisations de connexion à un autre groupement d'un ou plusieurs modules (non représentés) logés dans le boîtier 103, ou encore un ou plusieurs câbles de transmission de données (non représentés) reliés à des dispositifs électroniques de contrôle de la batterie, internes au boîtier 103.

Dans l'exemple représenté, la batterie 100 comprend, pour chaque module Mᵢ, un dispositif électronique de contrôle local CTLᵢ couplé au module Mᵢ. Chaque dispositif CTLᵢ peut comporter un ou plusieurs capteurs (non détaillés) agencés pour mesurer des caractéristiques physiques du module Mᵢ (tension, courant délivré et/ou reçu, température, etc.). Chaque dispositif CTLᵢ peut en outre comprendre des éléments actifs de contrôle du module Mᵢ correspondant, par exemple des éléments de contrôle de la charge ou de la décharge du module, par exemple des éléments d'équilibrage (par exemple adaptés à dériver tout ou partie du courant dans une résistance, une varistance ou une LED), et/ou des éléments de contrôle et de gestion de la température du module (par exemple un dispositif de refroidissement et/ou de chauffage). Pour son alimentation, chaque dispositif CTLᵢ peut être connecté électriquement aux bornes positive (+) et négative (-) du module (connexions non représentées sur la figure 1).

Dans l'exemple de la figure 1, la batterie 100 comprend en outre un dispositif électronique de contrôle global CTG. Le dispositif de contrôle global CTG est adapté à recevoir et centraliser des données en provenance des dispositifs de contrôle locaux CTLᵢ, et/ou à transmettre des données ou instructions à destination des dispositifs de contrôle locaux CTLᵢ.

Selon un aspect d'un mode de réalisation, la communication entre les dispositifs de contrôle locaux CTLᵢ et le dispositif de contrôle global CTG est une communication sans contact par lumière visible non guidée à l'intérieur du boîtier 103. Par lumière visible, on entend ici des longueurs d'ondes comprises entre 400 et 700 nm, par exemple entre 480 et 650 nm. Par lumière non guidée, on entend qu'il n'est pas prévu de guides d'ondes ou de fibres optiques entre les dispositifs de contrôle locaux CTLᵢ et le dispositif de contrôle global CTG. Autrement dit, la communication est une communication en champ libre à travers un espace libre transparent, par exemple rempli d'air, séparant les dispositifs de contrôle locaux CTLᵢ du dispositif de contrôle global CTG.

A titre d'exemple, chaque dispositif de contrôle local CTLᵢ comprend au moins un photoémetteur, par exemple une diode électroluminescente, et le dispositif de contrôle global CTG comprend au moins un photorécepteur, par exemple une photodiode. Ceci permet une communication des dispositifs de contrôle locaux CTLᵢ vers le dispositif de contrôle global CTG. Pour permettre une communication bidirectionnelle, le dispositif de contrôle global CTG peut en outre comprendre au moins un photoémetteur, par exemple une diode électroluminescente, et chaque dispositif de contrôle local CTLᵢ peut en outre comprendre au moins un photorécepteur, par exemple une photodiode.

De préférence, le boîtier 103 est en un matériau opaque, par exemple du métal ou un plastique opaque. Le boîtier 103 forme de préférence une enceinte close, étanche à la lumière, ce qui évite les risques d'interférence du système de communication avec la lumière extérieure et permet de mettre en oeuvre des communications avec un très bon rapport signal sur bruit.

On notera que dans l'exemple représenté, les dispositifs électroniques de contrôle locaux CTLᵢ sont disposés en vis-à-vis du dispositif de contrôle global CTG, sans obstacle opaque intermédiaire. Les modes de réalisation décrits ne se limitent toutefois pas à ce cas particulier. En pratique, les dispositifs de contrôle locaux CTLᵢ peuvent ne pas être directement en regard du dispositif de contrôle global CTG, pour autant qu'il existe un chemin libre de tout matériau opaque entre chaque dispositif CTLᵢ et le dispositif CTG. Dans ce cas, la transmission de la lumière entre les dispositifs CTLᵢ et le dispositif CTG fait intervenir des réflexions sur les parois intérieures du boîtier 103 et/ou sur les parois des différents éléments situés à l'intérieur du boîtier 103. Pour favoriser ces réflexions, la paroi intérieure du boîtier 103 est de préférence réfléchissante aux longueurs d'ondes utilisées par le système de communication. A titre d'exemple, le boîtier 103 est en un métal réfléchissant tel que l'aluminium. A titre de variante, un revêtement réfléchissant (non détaillé sur la figure 1), par exemple une couche métallique réfléchissante ou une couche d'une peinture de couleur claire, par exemple blanche, s'étend sur sensiblement toute la surface interne du boîtier 103. Les parois des boîtiers 101ᵢ des modules Mᵢ sont de préférence elles aussi réfléchissantes aux longueurs d'onde du système de communication. Par réfléchissant, on entend ici une surface présentant, à la longueur d'onde ou aux longueurs d'onde du système de communication, un coefficient de réflexion supérieur ou égal à 20 %, par exemple supérieur ou égal à 50 %, de préférence supérieur ou égal à 70 %.

La figure 2 est un schéma électrique simplifié d'un exemple de mise en oeuvre du système de communication entre les dispositifs électroniques de contrôle locaux CTLᵢ et le dispositif de contrôle global CTG dans la batterie 100 de la figure 1.

Sur la figure 2, on a représenté de façon schématique un unique dispositif de contrôle local CTLᵢ, ainsi que le dispositif de contrôle global CTG.

Le dispositif de contrôle local CTLᵢ comprend un photoémetteur 201, par exemple une diode électroluminescente, et, connecté électriquement au photoémetteur 201, un circuit électronique 203 (CTRL) de contrôle du photoémetteur 201.

Le dispositif de contrôle global CTG comprend quant à lui un photorécepteur 205, par exemple une photodiode, et, connecté électriquement au photorécepteur 205, un circuit électronique de contrôle 207 (CTRL).

Le dispositif de contrôle local CTLᵢ peut comporter un ensemble 209 d'un ou plusieurs éléments de contrôle du module Mᵢ correspondant (capteurs, dispositifs de protection, d'équilibrage, de contrôle de température, etc.), non détaillés sur la figure. Les éléments de contrôle 209 peuvent communiquer avec le circuit 203 de contrôle du photoémetteur 201 par l'intermédiaire de pistes et/ou fils électriquement conducteurs. Le circuit de contrôle 203 est quant à lui adapté à moduler la lumière émise par le photoémetteur 201 de façon à transmettre au dispositif de contrôle global CTG des données de sortie des éléments de contrôle 209. A titre d'exemple, les éléments 201, 203 et 209 du dispositif de contrôle local CTLᵢ sont montés sur une même carte de circuit imprimé connectée électriquement aux bornes positive (+) et négative (-) du module Mᵢ, cette carte pouvant être, par exemple, fixée au boîtier 101ᵢ du module Mᵢ.

Les signaux lumineux émis par le photoémetteur 201 sont captés par le photorécepteur 205 du dispositif de contrôle global CTG. Le circuit de contrôle 207 du dispositif CTG est adapté à lire un signal électrique représentatif des variations de la lumière reçue par le photorécepteur 205, et à démoduler ce signal pour en extraire un ou plusieurs signaux électriques représentatifs des données émises par le dispositif de contrôle local CTLᵢ. Ces données peuvent ensuite être transmises, par exemple par liaison filaire ou par liaison sans fil, à divers circuits de traitement, non représentés.

La modulation/démodulation de la lumière transmise entre le dispositif CTLᵢ et le dispositif CTG peut être mise en oeuvre selon tout protocole de communication en lumière visible adapté, par exemple un protocole selon la norme LiFi (IEEE 802.15.7), un protocole du type habituellement utilisé dans le domaine des communications radiofréquence, ou encore un protocole du type habituellement utilisé sur les bus de communication série filaires, par exemple les bus de type LIN (de l'anglais "Local Interconnect Network" - réseau d'interconnexion local), 1-Wire, RS485, CAN, MODBUS, etc.), éventuellement modulé sur une porteuse.

Comme indiqué précédemment, pour une communication bidirectionnelle, le dispositif de contrôle global CTG peut comporter un ou plusieurs photoémetteurs (non représentés) et chaque dispositif de contrôle locale CTLᵢ peut comporter un ou plusieurs photorécepteurs (non représentés).

Pour discriminer les signaux émis par ou vers les différents dispositifs de contrôle locaux CTLᵢ, des en-têtes de trames avec des codes d'identification spécifiques peuvent être prévus. Ceci permet notamment de mettre en oeuvre une communication asynchrone entre les différents dispositifs CTLᵢ et le dispositif CTG.

A titre de variante, la communication entre les différents dispositifs CTLᵢ et le dispositif CTG peut être une communication synchrone. Par exemple, les différents dispositifs CTLᵢ peuvent communiquer à tour de rôle avec le dispositif CTG, par exemple sur interrogation du dispositif CTG.

Alternativement ou de façon complémentaire, on peut prévoir des communications à des longueurs d'ondes distinctes entre le dispositif de contrôle global CTG et les différents dispositifs de contrôle locaux CTLᵢ. Pour cela, les photoémetteurs 201 des différents dispositifs CTLᵢ peuvent avoir des longueurs d'onde d'émission distinctes, et le dispositif de CTG peut comporter différents photorécepteurs, sensibles à des longueurs d'onde différentes, correspondant respectivement aux différentes longueurs d'ondes d'émission des dispositifs CTLᵢ.

Pour limiter leur consommation électrique, les dispositifs électroniques de contrôle locaux CTLᵢ sont mis en veille en dehors de phases de communication avec le dispositif de contrôle global CTG. Lors des phases de veille, des circuits des dispositifs CTLᵢ peuvent être désactivés de façon à réduire la consommation électrique globale du dispositif. Divers mécanismes de réveil des dispositifs CTLᵢ peuvent être prévus. Selon l'invention, chaque dispositif de contrôle local CTLᵢ est adapté à se réveiller à réception d'un signal lumineux spécifique en provenance du dispositif de contrôle global CTG. A titre d'exemple, chaque dispositif de contrôle local CTLᵢ peut comporter un circuit adapté à détecter un franchissement d'un seuil d'intensité lumineuse reçue par un photorécepteur du dispositif, et à réveiller le dispositif CTLᵢ lorsque le seuil est franchi.

A titre de variante, le réveil d'un dispositif CTLᵢ peut être déclenché sur détection d'une variation d'un courant et/ou d'une tension entre les bornes positive (+) et négative (-) du module Mᵢ, ou encore sur détection d'une variation de température au voisinage du module Mᵢ.

Un avantage du système de communication décrit en relation avec les figures 1 et 2 est qu'il est fiable, car non sujet aux perturbations électriques ou électromagnétiques susceptibles de survenir dans une batterie électrique.

De plus, un tel système est relativement peu coûteux à mettre en oeuvre dans la mesure où il peut être implémenté au moyen de simples diodes photoémettrices et photoréceptrices.

Un tel système est en outre relativement flexible à mettre en oeuvre, et modulaire. En particulier, du fait de l'absence de liaison filaire entre le dispositif de contrôle global et les dispositifs de contrôle locaux, des dispositifs de contrôle locaux supplémentaires peuvent aisément être ajoutés à un système existant, par exemple pour augmenter les fonctionnalités de contrôle disponibles dans une batterie existante et/ou en vue d'augmenter la capacité d'une batterie existante par l'ajout de modules Mᵢ supplémentaires.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, il est connu qu'une batterie peut être divisée en plusieurs modules comprenant chacun une pluralité de cellules reliées en série ou en parallèle entre deux bornes de contact du module, les modules étant reliés en série ou en parallèle entre les bornes de la batterie. Bien que cela n'ait pas été mentionné ci-dessus, l'homme de l'art saura modifier la granularité du système de communication décrit ci-dessus. Par exemple, au sein d'un même module Mᵢ, les cellules élémentaires du module peuvent être elles-mêmes équipées de dispositifs électroniques de contrôle locaux adaptés à communiquer avec le dispositif électronique de contrôle local CTLᵢ du module. La communication entre les dispositifs de contrôle des cellules et le dispositif de contrôle du module peut être une communication par lumière visible non guidée, similaire à ce qui a été décrit ci-dessus. A titre de variante, en l'absence des boîtiers intermédiaires 101ᵢ des modules Mᵢ, les dispositifs de contrôle locaux des cellules élémentaires peuvent être adaptés à communiquer directement avec le dispositif de contrôle global CTG de la batterie, par communication en lumière visible non guidée, sans nécessairement passer par les dispositifs de contrôle locaux CTLᵢ des modules Mᵢ.

## Revendications

1. Système de communication dans une batterie électrique (100) comportant une pluralité de cellules élémentaires disposées dans un boîtier (103), ce système comprenant des premier (CTLᵢ) et deuxième (CTG) dispositifs électroniques de contrôle destinés à être placés à l'intérieur du boîtier, dans lequel les premier (CTLᵢ) et deuxième (CTG) dispositifs électroniques de contrôle sont adaptés à communiquer l'un avec l'autre selon un procédé de communication par lumière visible non guidée,
dans lequel chaque premier dispositif électronique de contrôle (CTLᵢ) est configuré pour se mettre en veille entre deux phases de communication avec le deuxième dispositif électronique de contrôle (CTG),
et dans lequel chaque premier dispositif électronique de contrôle (CTLᵢ) présente un circuit adapté à déclencher une sortie de veille à réception d'un signal lumineux émis par le deuxième dispositif électronique de contrôle (CTG).

2. Système selon la revendication 1, dans lequel :
- le premier dispositif de contrôle (CTLᵢ) est un dispositif de contrôle local destiné à être connecté aux bornes d'un ensemble (Mᵢ) d'une ou plusieurs cellules élémentaires de la batterie ; et
- le deuxième dispositif de contrôle (CTG) est un dispositif de contrôle global.

3. Système selon la revendication 2, comportant une pluralité de premiers dispositifs électroniques de contrôle (CTLᵢ) adaptés à communiquer, selon ledit procédé, avec le même deuxième dispositif électronique de contrôle (CTG).

4. Système selon la revendication 3, dans lequel différents premiers dispositifs électroniques de contrôle (CTLᵢ) sont adaptés à communiquer avec le deuxième dispositif électronique de contrôle (CTG) à des longueurs d'ondes distinctes.

5. Système selon l'une quelconque des revendications 1 à 4, dans lequel chaque premier dispositif électronique de contrôle (CTLᵢ) comprend au moins un photoémetteur (201), et le deuxième dispositif électronique de contrôle (CTG) comprend au moins un photorécepteur (205).

6. Système selon la revendication 5, dans lequel chaque premier dispositif électronique de contrôle (CTLᵢ) comprend en outre au moins un photorécepteur (205), et dans lequel le deuxième dispositif électronique de contrôle (CTG) comprend en outre au moins un photoémetteur.

7. Système selon l'une quelconque des revendications 1 à 6, dans lequel les premier (CTLᵢ) et deuxième (CTG) dispositifs électroniques de contrôle sont adaptés à communiquer l'un avec l'autre selon un protocole de communication défini par la norme LiFi.

8. Système selon l'une quelconque des revendications 1 à 6, dans lequel les premier (CTLᵢ) et deuxième (CTG) dispositifs électroniques de contrôle sont adaptés à communiquer l'un avec l'autre selon un protocole de communication pour liaison radiofréquence ou pour liaison filaire, éventuellement modulé sur une porteuse.

9. Système selon l'une quelconque des revendications 1 à 8, dans lequel chaque premier dispositif électronique de contrôle (CTLᵢ) présente un circuit adapté à déclencher une sortie de veille sur détection d'une variation de courant, de tension ou de température.

10. Batterie électrique (100) comportant une pluralité de cellules élémentaires disposées dans un boîtier (103), et, à l'intérieur du boîtier, un système de communication selon l'une quelconque des revendications 1 à 9.

11. Batterie (100) selon la revendication 10, dans laquelle les premier (CTLᵢ) et deuxième (CTG) dispositifs électroniques de contrôle ne sont pas directement en regard l'un de l'autre, la communication entre lesdits dispositifs faisant intervenir des réflexions sur une face intérieure du boîtier (103).

12. Batterie (100) selon la revendication 10 ou 11, dans laquelle le boîtier (103) présente une face intérieure réfléchissante aux longueurs d'ondes du système de communication.

## Patentansprüche

1. Kommunikationssystem in einer elektrischen Batterie (100), die eine Vielzahl von Elementarzellen aufweist, die in einem Gehäuse (103) angeordnet sind, wobei dieses System erste (CTLᵢ) und eine zweite (CTG) elektronische Steuervorrichtungen aufweist, die dazu bestimmt sind, im Inneren des Gehäuses angeordnet zu werden, wobei die ersten (CTLᵢ) und die zweiten (CTG) elektronische Steuervorrichtungen so beschaffen sind, dass sie nach einem ungesteuerten Kommunikationsverfahren mit sichtbarem Licht miteinander kommunizieren,
wobei jede erste elektronische Steuervorrichtung (CTLᵢ) konfiguriert ist, zwischen zwei Kommunikationsphasen mit der zweiten elektronischen Steuervorrichtung (CTG) in den Bereitschaftszustand zu gehen,
und wobei jede erste elektronische Steuervorrichtung (CTLᵢ) eine Schaltung aufweist, die so ausgelegt ist, dass sie bei Empfang eines von der zweiten elektronischen Steuervorrichtung (CTG) ausgesandten Lichtsignals einen Standby-Ausgang auslöst.

2. System nach Anspruch 1, wobei:
- die erste Steuervorrichtung (CTLᵢ) eine lokale Steuervorrichtung ist, die dazu bestimmt ist, an die Klemmen eines Satzes (Mi) von einer oder mehreren Elementarzellen der Batterie angeschlossen zu werden; und
- die zweite Steuervorrichtung (CTG) eine globale Steuervorrichtung ist.

3. System nach Anspruch 2, das eine Vielzahl von ersten elektronischen Steuervorrichtungen (CTLᵢ) aufweist, die geeignet sind, gemäß dem genannten Verfahren, mit derselben zweiten elektronischen Steuervorrichtung (CTG) zu kommunizieren.

4. System nach Anspruch 3, wobei verschiedene erste elektronische Steuervorrichtungen (CTLᵢ) so ausgelegt sind, dass sie mit der zweiten elektronischen Steuervorrichtung (CTG) bei verschiedenen Wellenlängen kommunizieren.

5. System nach einem der Ansprüche 1 bis 4, wobei jede erste elektronische Steuervorrichtung (CTLᵢ) mindestens einen Fotoemitter (201) aufweist, und wobei die zweite elektronische Steuervorrichtung (CTG) mindestens einen Fotorezeptor (205) aufweist.

6. System nach Anspruch 5, wobei jede erste elektronische Steuervorrichtung (CTLᵢ) ferner mindestens einen Fotorezeptor (205) aufweist, und wobei die zweite elektronische Steuervorrichtung (CTG) ferner mindestens einen Fotoemitter aufweist.

7. System nach einem der Ansprüche 1 bis 6, wobei die ersten (CTLᵢ) und die zweiten (CTG) elektronischen Steuervorrichtungen so ausgelegt sind, dass sie gemäß einem durch den LiFi-Standard definierten Kommunikationsprotokoll miteinander kommunizieren.

8. System nach einem der Ansprüche 1 bis 6, wobei die ersten (CTLᵢ) und die zweiten (CTG) elektronischen Steuervorrichtungen so beschaffen sind, dass sie gemäß einem Kommunikationsprotokoll für eine Funkverbindung oder für eine drahtgebundene Verbindung, die möglicherweise auf einen Träger moduliert ist, miteinander kommunizieren.

9. System nach einem der Ansprüche 1 bis 8, wobei jede erste elektronische Steuervorrichtung (CTLᵢ) eine Schaltung hat, die so beschaffen ist, dass sie bei Erkennung einer Strom-, Spannungs- oder Temperaturänderung einen Standby-Ausgang auslöst.

10. Elektrische Batterie (100) mit einer Vielzahl von Elementarzellen, die in einem Gehäuse (103) angeordnet sind, und, innerhalb des Gehäuses, mit einem Kommunikationssystem nach einem der Ansprüche 1 bis 9.

11. Batterie (100) nach Anspruch 10, wobei die ersten (CTLᵢ) und die zweiten (CTG) elektronischen Steuervorrichtungen einander nicht direkt gegenüberliegen, wobei die Kommunikation zwischen den Vorrichtungen Reflexionen an einer Innenfläche des Gehäuses (103) beinhaltet.

12. Batterie (100) nach Anspruch 10 oder 11, wobei das Gehäuse (103) eine Innenfläche aufweist, die die Wellenlängen des Kommunikationssystems reflektiert.

## Claims

1. Communication system in an electric battery (100) including a plurality of elementary cells arranged in a housing (103), this system comprising first (CTLᵢ) and second (CTG) electronic control devices intended to be placed inside the housing, wherein the first (CTLᵢ) and second (CTG) electronic control devices are adapted to communicate with each other according to an unguided visible light communication method,
wherein each first electronic control device (CTLᵢ) is configured to go into standby between two phases of communication with the second electronic control device (CTG),
and wherein each first electronic control device (CTLᵢ) has a circuit adapted to trigger a standby exit upon receipt of a light signal emitted by the second electronic control device (CTG).

2. System according to claim 1, wherein:
- the first control device (CTLᵢ) is a local control device intended to be connected to the terminals of a set (Mi) of one or more elementary cells of the battery; and
- the second control device (CTG) is a global control device.

3. System according to claim 2, including a plurality of first electronic control devices (CTLᵢ) adapted to communicate, according to said method, with the same second electronic control device (CTG).

4. System according to claim 3, wherein different first electronic control devices (CTLᵢ) are adapted to communicate with the second electronic control device (CTG) at distinct wavelengths.

5. System according to any one of claims 1 to 4, wherein each first electronic control device (CTLᵢ) comprises at least one photoemitter (201), and the second electronic control device (CTG) comprises at least one photoreceptor (205).

6. System according to claim 5, wherein each first electronic control device (CTLᵢ) further comprises at least one photoreceptor (205), and wherein the second electronic control device (CTG) further comprises at least one photoemitter.

7. System according to any one of claims 1 to 6, wherein the first (CTLᵢ) and second (CTG) electronic control devices are adapted to communicate with each other according to a communication protocol defined by the LiFi standard.

8. System according to any one of claims 1 to 6, wherein the first (CTLᵢ) and second (CTG) electronic control devices are adapted to communicate with each other according to a communication protocol for radio frequency link or for wired link, possibly modulated on a carrier.

9. System according to any one of claims 1 to 8, wherein each first electronic control device (CTLᵢ) has a circuit adapted to trigger a standby exit upon detection of a variation in current, voltage, or temperature.

10. Electric battery (100) including a plurality of elementary cells arranged in a housing (103), and, inside the housing, a communication system according to any one of claims 1 to 9.

11. Battery (100) according to claim 10, wherein the first (CTLᵢ) and second (CTG) electronic control devices are not directly facing each other, the communication between said devices involving reflections on an inner face of the housing (103).

12. Battery (100) according to claim 10 or 11, wherein the housing (103) has an inner face reflecting the wavelengths of the communication system.
